# EUROPÄISCHE PATENTSCHRIFT

(11) **EP 1 741 299 B1**
(45) Veröffentlichungstag und Bekanntmachung des Hinweises auf die Patenterteilung: **19.09.2007**
(21) Anmeldenummer: 05737434.0
(22) Anmeldetag: 08.04.2005
(51) Int. Cl.: H04N 17/00

(54) **VORRICHTUNG UND VERFAHREN ZUM AUFNEHMEN EINES BILDES**
IMAGE RECORDING DEVICE AND METHOD
DISPOSITIF ET PROCEDE D'ENREGISTREMENT D'UNE IMAGE

(30) Priorität: 26.04.2004 DE 102004020331
(43) Veröffentlichungstag der Anmeldung: 10.01.2007
(73) Patentinhaber: Pilz GmbH & Co. KG, 73760 Ostfildern (DE)
(72) Erfinder: SCHNAITHMANN, Martin, 73734 Esslingen-Berkheim (DE)
(74) Vertreter: Duhme, Torsten
(86) Internationale Anmeldenummer: PCT/EP2005/003695
(87) Internationale Veröffentlichungsnummer: WO 2005/104527

(56) Entgegenhaltungen:
- EP-A- 1 487 193
- US-A1- 2003 030 723
- EBERT D M ET AL: "Safe human-robot-cooperation: image-based collision detection for industrial robots" PROCEEDINGS OF THE 2002 IEEE/RSJ INTERNATIONAL CONFERENCE ON INTELLIGENT ROBOTS AND SYSTEMS. (IROS 2002). LAUSANNE, SWITZERLAND, SEPT. 30 - OCT. 4, 2002, IEEE/RSJ INTERNATIONAL CONFERENCE ON INTELLIGENT ROBOTS AND SYSTEMS, NEW YORK, NY : IEEE, US, Bd. VOL. 1 OF 3, 30. September 2002 (2002-09-30), Seiten 1826-1831, XP010609685 ISBN: 0-7803-7398-7

## Beschreibung

Die vorliegende Erfindung betrifft eine Vorrichtung zum Aufnehmen eines Bildes, mit einem Bildsensor mit einer Vielzahl von lichtempfindlichen Bildzellen, die zum Auslesen ihrer Bildsignalwerte wahlweise adressierbar sind.

Die Erfindung betrifft ferner einen Bildsensor für eine solche Vorrichtung sowie ein Verfahren zum Aufnehmen eines Bildes mit einem Bildsensor, der eine Vielzahl von lichtempfindlichen Bildzellen aufweist, wobei die Bildzellen zum Auslesen ihrer Bildsignalwerte wahlweise adressierbar sind.

Eine solche Vorrichtung und ein solches Verfahren sind beispielsweise aus WO 01/78411 A1 bekannt.

In dieser Druckschrift ist eine Schutzvorrichtung zum Absichern eines Gefahrenbereichs beschrieben, wie etwa des Gefahrenbereichs einer automatisiert arbeitenden Anlage. Die Schutzvorrichtung basiert darauf, dass ein Abbild des Gefahrenbereichs mit einer Kamera, genauer gesagt mit einem Bildsensor, aufgenommen wird. Das aufgenommene Abbild wird anschließend einer Auswertung unterzogen, an Hand der festgestellt wird, ob sich ein unbefugtes Objekt in dem Gefahrenbereich befindet. Ist dies der Fall, löst die Schutzvorrichtung eine geeignete Aktion aus. Beispielsweise wird eine überwachte Anlage von der Schutzvorrichtung in einen gefahrlosen Zustand gebracht, indem sie abgeschaltet wird oder eine Ruheposition angesteuert wird. Damit übernimmt die in WO 01/78411 A1 beschriebene Schutzvorrichtung Aufgaben, für die in der Praxis bislang typischerweise Lichtschranken, Lichtgitter, Schutzzäune und Ähnliches eingesetzt werden.

Die neue Schutzvorrichtung übernimmt somit sicherheitskritische Aufgaben. Daher ist es erforderlich, die Funktionssicherheit der Schutzvorrichtung zu gewährleisten, und zwar in einem Maße, das eine Gefährdung von Personen durch Funktionsfehler der Schutzvorrichtung zuverlässig ausschließt. Die neue Schutzvorrichtung soll daher einfehlersicher sein und zumindest den Anforderungen der Kategorie 3 der Europäischen Norm EN 954-1 oder vergleichbaren Sicherheitsanforderungen entsprechen. Bevorzugt sollen sogar die Anforderungen der Kategorie 4 der EN 954-1 oder vergleichbare Anforderungen erfüllt werden. Hierzu sind regelmäßige Funktionstests der Vorrichtung im laufenden Betrieb erforderlich.

Um eine sichere und zeitlich lückenlose Absicherung des Gefahrenbereichs zu ermöglichen, schlägt die genannte WO 01/78411 A1 vor, ein von der Schutzvorrichtung aufgenommenes Objektbild gezielt zu dynamisieren. Durch Auswertung der damit künstlich hervorgerufenen Veränderungen im Objektbild ist es möglich, insbesondere die Funktionssicherheit des verwendeten Bildsensors zu überwachen. Damit lassen sich beispielsweise sog. Stuck-at-Fehler frühzeitig entdecken, bei denen einzelne oder mehrere Bildzellen des Bildsensors unabhängig vom Objektbild einen konstanten Bildsignalwert liefern.

Die gezielte Veränderung des Objektbildes erfordert allerdings Komponenten, die den Strahlengang des auf den Bildsensor einfallenden Lichts beeinflussen. Dies macht die beschriebene Schutzvorrichtung relativ aufwendig und teuer.

Als Alternative schlägt WO 03/067900 A1 ein Verfahren zum Überprüfen der Funktionssicherheit eines Bildsensors vor, das auf einer statistischen Analyse der Bildsignalwerte des Bildsensors beruht. Dabei wird das Rauschverhalten in den Bildsignalwerten des Bildsensors ausgewertet. Aus Veränderungen im Rauschverhalten lassen sich Rückschlüsse auf mögliche Funktionsfehler des Bildsensors ziehen.

Eine Aufgabe der vorliegenden Erfindung ist es, eine weitere Möglichkeit anzugeben, um Funktionsfehler bei einer Vorrichtung der eingangs genannten Art zuverlässig und im laufenden Betrieb zu detektieren.

Diese Aufgabe wird durch eine Vorrichtung der eingangs genannten Art gelöst, die eine Vielzahl von Speicherzellen zum Abspeichern von Identifikationscodes besitzt, wobei jeder Bildzelle ein Identifikationscode zugeordnet ist, und wobei die Bildzellen und die Speicherzellen so miteinander gekoppelt sind, dass beim Auslesen eines Bildsignalwertes aus einer Bildzelle der zugeordnete Identifikationscode mitauslesbar ist. Besonders bevorzugt ist es, wenn die Speicherzellen dabei in den Bildsensor integriert sind, wie weiter unten noch näher ausgeführt ist. In diesem Fall wird die Aufgabe auch durch einen Bildsensor mit einer Vielzahl von lichtempfindlichen Bildzellen gelöst, der zusätzlich noch eine Vielzahl der genannten Speicherzellen beinhaltet.

Die Aufgabe wird ferner durch ein Verfahren der eingangs genannten Art gelöst, das folgende Schritte aufweist:
a) Bereitstellen von Identifikationscodes in Speicherzellen, die mit den Bildzellen gekoppelt sind, wobei jeder Bildzelle ein Identifikationscode zugeordnet ist,
b) Auslesen von Bildsignalwerten aus zumindest einer Bildzelle,
c) Auslesen des der zumindest einen Bildzelle zugeordneten Identifikationscodes,
d) Überprüfen, ob der ausgelesene Identifikationscode der zumindest einen ausgelesenen Bildzelle zugeordnet ist, und
e) Verwerten der ausgelesenen Bildsignalwerte abhängig von dem Ergebnis in Schritt d).

Die Erfindung basiert somit auf der Idee, einen zusätzlichen Schutzmechanismus zu realisieren, mit dessen Hilfe gewährleistet werden kann, dass der von einer Bildzelle ausgelesene Bildsignalwert tatsächlich von der angesprochenen Bildzelle stammt. Damit lassen sich Adressierungsfehler und andere Funktionsfehler im Ansteuerkreis des verwendeten Bildsensors zuverlässig und auf Ebene der Bildzellen detektieren. Derartige Fehler können zwar grundsätzlich auch durch eine gezielte Dynamisierung des Objektbildes oder ein von außen eingespeistes Testbild detektiert werden, die vorliegende Erfindung besitzt demgegenüber jedoch den Vorteil, dass sie eine zeitlich lückenlose Fehlerüberwachung im laufenden Überwachungsbetrieb mit einem geringen hardwaretechnischen Aufwand ermöglicht. Die vorliegende Erfindung ist damit eine kostengünstige Alternative zu den bislang bekannten Fehlerüberwachungsmaßnahmen. Sie kann jedoch auch in Ergänzung zu den bislang bekannten Fehlerüberwachungsmaßnahmen eingesetzt werden, um die Funktionssicherheit einer entsprechenden Schutzvorrichtung noch zuverlässiger zu gewährleisten.

Die genannte Aufgabe ist daher vollständig gelöst.

In einer bevorzugten Ausgestaltung der Erfindung ist eine Adressierungseinheit vorgesehen, die so ausgebildet ist, dass sie einander zugeordnete Speicherzellen und Bildzellen beim Auslesen gemeinsam adressiert.

In dieser Ausgestaltung werden die Bildzellen und die ihnen zugeordneten Speicherzellen durch die Adressierungseinheit miteinander verkoppelt. Die Adressierungseinheit ermöglicht es, die Bildzellen und die zugeordneten Speicherzellen in einem Arbeitszyklus auszulesen, also weitgehend zeitgleich. Auf diese Weise wird eine sehr einfache und direkte Kopplung zwischen den Bildzellen und zugeordneten Speicherzellen erreicht. Adressierungsfehler lassen sich sehr schnell und zuverlässig aufdecken.

In einer besonders bevorzugten Ausgestaltung der Erfindung sind die Speicherzellen in den Bildsensor integriert.

In dieser Ausgestaltung der Erfindung befinden sich die Speicherzellen also auf demselben Chip wie die lichtempfindlichen Bildzellen. Diese Ausgestaltung ermöglicht einerseits eine sehr kompakte Realisierung. Darüber hinaus kann die Zuordnung von Speicherzellen und lichtempfindlichen Bildzellen in dieser Ausgestaltung auf dem Chip angelegt werden, was zu einer noch direkteren und zuverlässigeren Zuordnung führt. Außerdem können die Speicherzellen in dieser Ausgestaltung sehr kostengünstig in die neue Schutzvorrichtung integriert werden.

In einer weiteren Ausgestaltung sind die Speicherzellen im Wesentlichen wie Bildzellen des Bildsensors ausgebildet, die mit einem lichtunabhängigen Signalwert belegt sind.

Diese Ausgestaltung ist eine besonders einfache und kostengünstige Möglichkeit, um die Speicherzellen in den Bildsensor zu integrieren. Die Speicherzellen sind hiernach mit gleichen Herstellungsprozessen und zumindest weitgehend in denselben Verfahrensschritten ausgebildet wie die lichtempfindlichen Bildzellen auch. Detailunterschiede zwischen den Bildzellen und den Speicherzellen können sich natürlich auf Grund ihrer unterschiedlichen Funktionen ergeben. Beispielsweise benötigen die Speicherzellen im Unterschied zu den lichtempfindlichen Bildzellen keinen lichtempfindlichen (fotoelektrischen) Bereich, wenngleich dieser aus Gründen der Prozessökonomie trotzdem vorgesehen werden kann. Andererseits müssen die Speicherzellen im Unterschied zu den lichtempfindlichen Bildzellen mit einem definierten Signalwert gezielt "geladen" werden können, was abhängig von dem verwendeten Bildsensor Unterschiede im schaltungstechnischen Aufbau zwischen den Speicherzellen und den Bildzellen zur Folge haben kann. Die hier bevorzugte Ausgestaltung zeichnet sich jedoch dadurch aus, dass die Speicherzellen genauso wie die lichtempfindlichen Bildzellen des Bildsensors adressierbar und auslesbar sind. Dies ermöglicht eine besonders einfache und zuverlässige Detektion von Funktionsfehlern. Darüber hinaus können weitere Fehlerquellen in dieser Ausgestaltung der Erfindung einfach und zuverlässig erkannt werden, beispielsweise Kopplungen zwischen verschiedenen Bildzellen. Hierunter sind Fehler zu verstehen, in deren Folge die Bildsignalwerte einer oder mehrerer Bildzellen von den Bildsignalwerten anderer Bildzellen abhängen. Indem die Speicherzellen in dieser Ausgestaltung der Erfindung wie Bildzellen realisiert sind, wirken sich solche Fehlerquellen auch auf die Speicherzellen aus, und sie können auf Grund der bekannten Identifikationscodes zuverlässig erkannt werden.

In einer weiteren Ausgestaltung sind die Bildzellen in einer Vielzahl von Zeilen angeordnet und jeder Zeile ist ein Identifikationscode zugeordnet.

In dieser Ausgestaltung besitzt also nicht jede einzelne Bildzelle ihren "eigenen" Identifikationscode. Vielmehr ist den Bildzellen jeder Zeile des Bildsensors ein gemeinsamer Identifikationscode zugeordnet. Diese Ausgestaltung vereinfacht die praktische Realisierung sowohl hardwaretechnisch als auch bei der Auswertung, da Bildsensoren häufig zeilenweise ausgelesen werden.

In einer weiteren Ausgestaltung sind die Bildzellen in einer Vielzahl von Zeilen angeordnet und jede Zeile beinhaltet eine Vielzahl von Speicherzellen.

Diese Ausgestaltung ist besonders vorteilhaft, wenn die Speicherzellen wie Bildzellen realisiert sind, da die Identifikationscodes dann beim Auslesen der Bildzellen automatisch "mitgeliefert" werden. Unabhängig davon wäre es alternativ außerdem auch möglich, für jede Zeile des Bildsensors nur eine einzige Speicherzelle zur Verfügung zu stellen. Unterschiedliche Identifikationscodes könnten dann beispielsweise durch unterschiedliche Spannungspegel, also analog codiert werden. Die bevorzugte Ausgestaltung vereinfacht die Auswertung, da eine Vielzahl von Zeilen digital kodiert werden kann und die Bildsignalwerte moderner Bildsensoren in aller Regel digital weiter verarbeitet werden.

In einer weiteren Ausgestaltung bilden die Bildzellen auf dem Bildsensor einen zusammenhängenden Bildzellenbereich und die Speicherzellen bilden einen zusammenhängenden Speicherzellenbereich. Vorzugsweise grenzt der Speicherzellenbereich an zumindest einer Seite an den Bildzellenbereich an.

Alternativ hierzu wäre es grundsätzlich auch möglich, die Speicherzellen über den Bildzellenbereich zu verteilen, d.h. die Speicherzellen zwischen den Bildzellen anzuordnen. Die räumliche Trennung von Speicherzellen und Bildzellen ermöglicht jedoch eine einfachere und kostengünstigere Herstellung des bevorzugten Bildsensors. Außerdem lassen sich in dieser Ausgestaltung "lückenlose" Bilder in einer höheren Auflösung erreichen. Die weiter bevorzugte Ausgestaltung ist fertigungstechnisch noch einfacher, insbesondere wenn die Speicherzellen wie Bildzellen realisiert sind.

In einer weiteren Ausgestaltung sind die Bildzellen in einer Vielzahl von Spalten angeordnet und jeder Spalte ist ein Identifikationscode zugeordnet.

Diese Ausgestaltung ist besonders vorteilhaft, wenn außerdem auch jeder Zeile des Bildsensors Speicherzellen mit einem Identifikationscode zugeordnet sind. In diesem Fall kann ein individueller Identifikationscode jeder Bildzelle sehr einfach und kostengünstig zugeordnet werden. Funktionsfehler lassen sich damit auf Ebene der Bildzellen einzeln detektieren. Andererseits kann eine spaltenweise Codierung die zeilenweise Codierung mit den dort erwähnten Vorteilen ersetzen.

In einer weiteren Ausgestaltung ist eine mit den Speicherzellen verbundene Steuerlogik vorhanden, die dazu ausgebildet ist, in den Speicherzellen abgespeicherte Identifikationscodes zyklisch oder azyklisch zu ändern, insbesondere zu negieren. In einem besonders bevorzugten Ausführungsbeispiel werden die Identifikationscodes nach jedem Auslesen der Bildsignalwerte, d.h. nach jedem Bild ("Frame") verändert.

In dieser Ausgestaltung erhalten die Identifikationscodes eine definierte Dynamik, die eine leichte Aufdeckung von weiteren Fehlerquellen, beispielsweise Stuck-at-Fehlern und Kopplungen zwischen Bildzellen, ermöglicht. Außerdem kann ohne äußere Hilfsmittel sehr einfach erkannt werden, ob der Bildsensor ein stets aktualisiertes Livebild liefert oder ob stets dieselben Bilddaten ausgelesen werden. Die Fehlerüberwachung ist daher besonders aussagekräftig.

In einer weiteren Ausgestaltung sind die Identifikationscodes als fehlererkennende Codes in den Speicherzellen abgespeichert. In bevorzugten Ausführungsbeispielen sind die Identifikationscodes mit einer CRC-Prüfsumme abgesichert und/oder es wird ein Hammingcode, ein sog. Walking Code oder ein 2-aus-5-Code verwendet. Die zuletzt genannten Codes besitzen die Eigenschaft, dass sich von einem Codewort zum nächsten jeweils mehrere Bits verändern, so dass Fehler beim Auslesen benachbarter Identifikationscodes einfacher und mit größerer Zuverlässigkeit erkannt werden können.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung einer erfindungsgemäßen Vorrichtung zum Absichern des Gefahrenbereichs einer automatisiert arbeitenden Anlage,
- Fig. 2: eine vereinfachte Darstellung einer Bildaufnahmeeinheit für die Vorrichtung aus Fig. 1, und
- Fig. 3: eine vereinfachte Darstellung eines Bildsensors gemäß einem weiteren Ausführungsbeispiel der Erfindung.

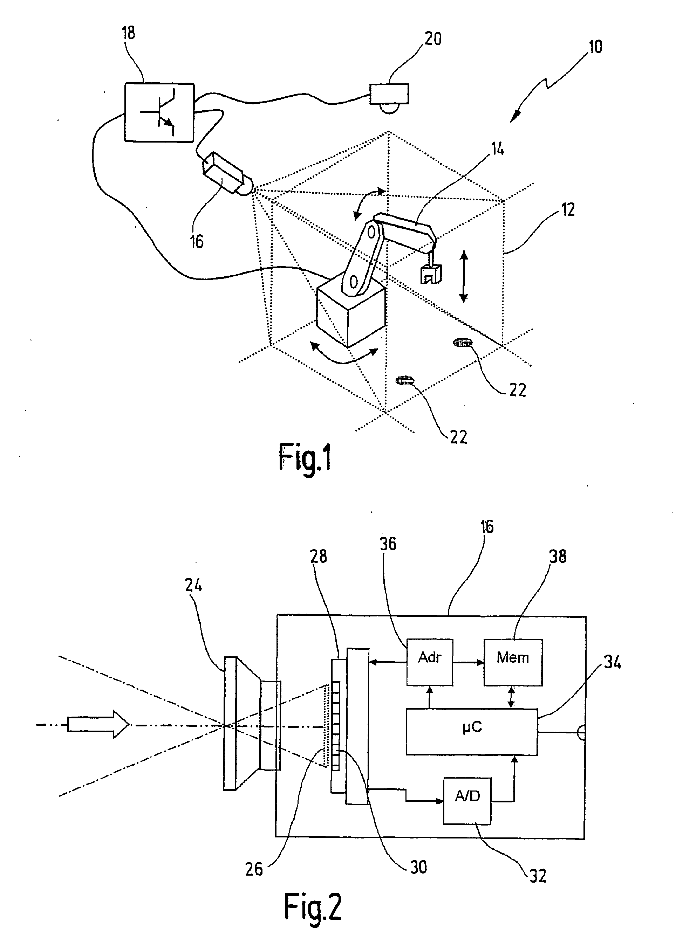

In Fig. 1 ist ein Ausführungsbeispiel der neuen Vorrichtung in seiner Gesamtheit mit der Bezugsziffer 10 bezeichnet.

Die Vorrichtung 10 dient hier zum Absichern eines Gefahrenbereichs 12, der sich auf Grund der automatisierten Bewegungen (angedeutet durch Pfeile) eines Roboters 14 ergibt. Sobald eine Person (hier nicht dargestellt) den Gefahrenbereich 12 betritt, muss der Roboter 14 in eine ungefährliche Ruhelage gebracht werden. Dies geschieht mit Hilfe der neuen Vorrichtung 10. Der Vollständigkeit halber sei darauf hingewiesen, dass die Erfindung nicht nur zum Absichern von Robotern, sondern auch zum Absichern aller anderen Gefahrenbereiche verwendet werden kann, die sich insbesondere aus der automatisierten Bewegung von technischen Anlagen ergeben. Darüber hinaus kann die Erfindung auch bei allen anderen Anwendungen eingesetzt werden, bei denen ein Raumbereich mit einem Bildsensor optisch überwacht wird.

Die Vorrichtung 10 beinhaltet eine Bildaufnahmeeinheit 16 und eine Auswerte- und Steuereinheit 18. Mit der Bezugsziffer 20 ist eine Lichtquelle bezeichnet, die von der Auswerte- und Steuereinheit 18 angesteuert wird, um den Roboter 14 bzw. dessen Gefahrenbereich 12 zu beleuchten. Die Lichtquelle 20 kann auch entfallen, wenn die Grundhelligkeit im Bereich des Roboters 14 ausreichend ist, um eine Bildauswertung mit der erforderlichen Erkennungssicherheit durchzuführen.

Mit der Bezugsziffer 22 sind zwei im Gefahrenbereich 12 angeordnete Referenzobjekte bezeichnet. Die Referenzobjekte 22 besitzen jeweils eine definierte Position und einen definierten Kontrast, was weitere Funktionskontrollen der Vorrichtung 10 ermöglicht. Beispielsweise kann mit Hilfe der Referenzobjekte 22 überwacht werden, dass sich die Bildaufnahmeeinheit 16 an der vorgegebenen Position befindet und nicht so stark verschmutzt ist, dass eine sichere Überwachung des Gefahrenbereichs 12 gefährdet ist.

Die Bildaufnahmeeinheit 16 wird von der Auswerte- und Steuereinheit 18 angesteuert, was u.a. auch weitere Funktionstests beinhaltet. Des Weiteren führt die Auswerte- und Steuereinheit 18 die Bildauswertung durch, und sie schaltet ggf. den Roboter 14 in die sichere Ruheposition. Alternativ zu der getrennten Darstellung von Bildaufnahmeeinheit 16 und Auswerte- und Steuereinheit 18 in Fig. 1 können die beiden genannten Einheiten auch zusammengefasst sein. Des Weiteren könnte die Auswerte- und Steuereinheit 18 in eine Betriebssteuerung (hier nicht dargestellt) für den Roboter 14 integriert sein.

Gemäß Fig. 2 beinhaltet die Bildaufnahmeeinheit 16 ein Objektiv 24, mit dem das Abbild 26 des Gefahrenbereichs 12 auf einen Bildsensor 28 abgebildet wird. Der Bildsensor 28 besitzt eine Vielzahl von Bildzellen 30, die häufig auch als Pixel bezeichnet werden. Bevorzugt handelt es sich hier um einen Bildsensor in CMOS-Technologie, wenngleich die Erfindung hierauf nicht beschränkt ist. Die Bildzellen sind wahlweise adressierbar, und zwar bevorzugt zeilenweise, spaltenweise, blockweise oder auch einzeln wie bei einem RAM. Die Erfindung ist jedoch nicht auf Bildsensoren beschränkt, deren Bildzellen einzeln auslesbar sind. Die Eigenschaft "wahlweise adressierbar" beihaltet folglich auch Bildsensoren, bei denen die Bildzellen jeweils nur gruppenweise, also beispielsweise zeilen- oder spaltenweise auslesbar sind.

Mit der Bezugsziffer 32 ist ein A/D-Wandler bezeichnet, der die analogen Bildsignalwerte der Bildzellen 30 in digitale Bildsignalwerte umwandelt. Die digitalen Bildsignalwerte werden anschließend einem Mikrocontroller 34 zugeführt. Anstelle eines Mikrocontrollers kann hier auch ein FPGA (Field Programmable Logic Array) oder eine andere Signalverarbeitungsschaltung verwendet sein. Je nach Leistungsfähigkeit kann der Mikrocontroller 34 auch einen Teil der Bildauswertung durchführen oder sogar die Auswerte- und Steuereinheit 18 (Fig. 1) darstellen. In bevorzugten Ausführungsbeispielen ist der Mikrocontroller 34 zweikanalig-redundant realisiert (hier nicht dargestellt), wobei sich die redundanten Teile gegenseitig überwachen, um auch in diesem Bereich eine hohe Fehlersicherheit zu gewährleisten.

Mit der Bezugsziffer 36 ist eine Adressierungseinheit bezeichnet, die die zum Auslesen der einzelnen Bildzellen 30 erforderlichen Adresssignale erzeugt. Abweichend von der Darstellung in Fig. 2 kann die Adressierungseinheit 36 auch auf demselben Chip implementiert sein wie der Bildsensor 28. In einem Ausführungsbeispiel der Erfindung erzeugt die Adressierungseinheit 36 insbesondere zwei Steuersignale, die als *Line* enable und *Frame enable* bekannt sind. Mit diesen Steuersignalen wird das zeilenweise Auslesen der Bildsignalwerte aus den Bildzellen 30 aktiviert. Des Weiteren erzeugt die Adressierungseinheit 36 in an sich bekannter Weise ein Taktsignal (hier nicht dargestellt), welches das zeilenweise Auslesen der einzelnen Bildsignalwerte synchronisiert.

Mit der Bezugsziffer 38 ist ein Speicher bezeichnet, der eine Vielzahl von Speicherzellen (hier nicht dargestellt) beinhaltet. In den Speicherzellen sind Identifikationscodes (hier nicht dargestellt) abgespeichert, die den einzelnen Bildzellen 30 des Bildsensors 28 zugeordnet sind. Der Speicher 38 wird von der Adressierungseinheit 36 angesteuert, und zwar parallel zu dem Bildsensor 28. Er liefert die den Bildzellen 30 zugeordneten Identifikationscodes synchron zu den jeweiligen Bildsignalwerten an den Mikrocontroller 34.

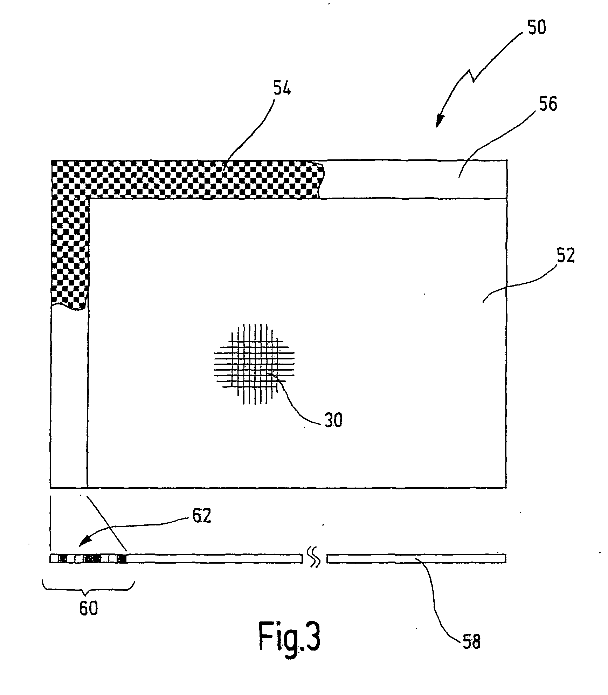

Die schematische Darstellung in Fig. 2 zeigt ein mögliches Ausführungsbeispiel, bei dem der Speicher 38 mit den Identifikationscodes getrennt von dem Bildsensor 28 realisiert ist. Abweichend hiervon ist es derzeit jedoch bevorzugt, den Speicher 38 in den Bildsensor 28 zu integrieren, wie dies nachfolgend anhand Fig. 3 erläutert ist. Der in Fig. 2 gezeigte Aufbau besitzt demgegenüber allerdings den Vorteil, dass der Bildsensor 28 nicht modifiziert werden muss, d.h. es lassen sich bei der getrennten Anordnung von Bildsensor 28 und Speicher 38 herkömmliche Bildsensoren 28 verwenden.

Unabhängig von der praktischen Realisierung ist es jedoch bevorzugt, wenn der Inhalt des Speichers 38, d.h. die Identifikationscodes, durch den Mikrocontroller 34 oder eine andere geeignete Steuerlogik veränderbar sind. In einem besonders bevorzugten Ausführungsbeispiel negiert der Mikrocontroller 34 die den einzelnen Bildzellen 30 zugeordneten Identifikationscodes nach dem Auslesen jedes neuen Bildes. Dies ist in Fig. 2 an Hand eines Doppelpfeils zwischen dem Mikrocontroller 34 und dem Speicher 38 dargestellt. In einfacheren Ausführungsbeispielen sind die Identifikationscodes demgegenüber fest vorgegeben und im Betrieb der Bildaufnahmeeinheit 16 nicht veränderbar.

In Fig. 3 ist ein Ausführungsbeispiel eines bevorzugten Bildsensors in seiner Gesamtheit mit der Bezugsziffer 50 bezeichnet. Der Bildsensor 50 besitzt einen Bildzellenbereich 52 mit einer Vielzahl lichtempfindlicher Bildzellen 30. In einem bevorzugten Ausführungsbeispiel ist die lichtempfindliche Fläche 640 x 480 Bildzellen groß, was die Aufnahme eines Abbildes 26 in VGA-Auflösung ermöglicht. Die Erfindung ist hierauf jedoch nicht beschränkt und kann gleichermaßen bei größeren oder kleineren Bildsensoren angewendet werden. Grundsätzlich kann die Erfindung auch bei sog. Zeilensensoren angewendet werden, deren lichtempfindliche Fläche nur eine Zeile mit einer Vielzahl von Bildzellen beinhaltet. In bevorzugten Ausführungsbeispielen ist der Bildsensor 50 jedoch ein zweidimensionaler Bildsensor mit einer matrixartigen Anordnung der Bildzellen 30.

Am seinem linken und an seinem oberen Rand besitzt der Bildsensor 50 einen Speicherzellenbereich 54 mit einer Vielzahl von Speicherzellen. Der Speicherzellenbereich 54 ist in diesem Ausführungsbeispiel mit einer lichtundurchlässigen Schicht 56 bedeckt, so dass der Inhalt der Speicherzellen unabhängig vom Lichteinfall ist. Demgegenüber ist der Bildzellenbereich 52 in an sich bekannter Weise "offen", d.h. hier kann einfallendes Licht die Bildzellen 30 beleuchten. Zur Veranschaulichung ist die Schicht 56 in Fig. 3 teilweise aufgeschnitten dargestellt, um die darunter liegenden Speicherzellen zu zeigen.

Unterhalb des Bildsensors 50 ist in Fig. 3 eine einzelne Zeile 58 vergrößert dargestellt. Die Zeile 58 besitzt im linken Bereich neun Speicherzellen 60, deren jeweilige Signalwerte fest vorgegeben sind. Die Signalwerte in den einzelnen Speicherzellen 60 bilden einen Identifikationscode, der den Bildzellen 30 der Zeile 58 zugeordnet ist. In gleicher Weise bilden die oberhalb des Bildzellenbereichs 52 angeordneten Speicherzellen einen Identifikationscode, der die Bildzellen 30 spaltenweise identifiziert. In einfacheren Ausführungsbeispielen der Erfindung genügt jedoch eine zeilenweise oder spaltenweise Identifikation der Bildzellen 30.

Der Identifikationscode 62 ist im einfachsten Fall ein Dualcode, der die jeweilige Zeilennummer (bzw. Spaltennummer) angibt. In bevorzugten Ausführungsbeispielen wird allerdings ein fehlererkennender Code verwendet, beispielsweise ein Hammingcode, ein 2-aus-5-Code oder ein Walking Code. Des Weiteren kann der Identifikationscode 62 in an sich bekannter Weise durch eine CRC oder dgl. abgesichert sein.

In einem weiteren Ausführungsbeispiel sind die Speicherzellen "normale" Bildzellen, die mit den Identifikationscodes "geladen" sind. Dies kann beispielsweise mit Hilfe eines Speisestroms oder einer Speisespannung geschehen, die Ladungen in die Bildzellen induzieren (vorzugsweise bis zur Sättigung, d.h. entsprechend einer maximalen Beleuchtung) oder Ladungen schnellstmöglich absaugen. In einem weiteren Ausführungsbeispiel besitzen zumindest einige der "normalen" Bildzellen einen ersten und einen zweiten Betriebsmodus. Im ersten Betriebsmodus arbeiten sie als "normale" Bildzellen. Im zweiten Betriebsmodus arbeiten sie als Speicherzellen im Sinne der vorliegenden Erfindung. Die Umschaltung erfolgt vorzugsweise von außen durch Anlegen eines geeigneten Signals, das beispielsweise einen Transistor ansteuert, der den Speise- bzw. Entladestrom ein- oder ausschaltet. Dieses Ausführungsbeispiel besitzt den Vorteil, dass die nutzbare Bildfläche des Bildsensors vergrößert werden kann, wenn die Identifikationscodes nicht benötigt werden, was beispielsweise der Fall ist, wenn Funktionstests nicht permanent, sondern nur zyklisch durchgeführt werden müssen.

## Patentansprüche

1. Vorrichtung zum Aufnehmen eines Bildes, mit einem Bildsensor (28; 50) mit einer Vielzahl von lichtempfindlichen Bildzellen (30), die zum Auslesen ihrer Bildsignalwerte wahlweise adressierbar sind, **gekennzeichnet durch** eine Vielzahl von Speicherzellen (38; 60) zum Abspeichern von Identifikationscodes (62), wobei jeder Bildzelle (30) ein Identifikationscode (62) zugeordnet ist, und wobei die Bildzellen (30) und die Speicherzellen (38; 60) so miteinander gekoppelt sind, dass beim Auslesen eines Bildsignalwertes aus einer Bildzelle (30) der zugeordnete Identifikationscode (62) mitauslesbar ist.

2. Vorrichtung nach Anspruch 1, **gekennzeichnet durch** eine Adressierungseinheit (36), die so ausgebildet ist, dass sie einander zugeordnete Speicherzellen (38; 60) und Bildzellen (30) beim Auslesen gemeinsam adressiert.

3. Vorrichtung nach Anspruch 1 oder 2, **dadurch gekennzeichnet, dass** die Speicherzellen (60) in den Bildsensor (50) integriert sind.

4. Vorrichtung nach einem der Ansprüche 1 bis 3, **dadurch gekennzeichnet, dass** die Speicherzellen (60) im Wesentlichen wie Bildzellen (30) des Bildsensors (50) ausgebildet sind, die mit einem lichtunabhängigen Signalwert belegt sind.

5. Vorrichtung nach einem der Ansprüche 1 bis 4, **dadurch gekennzeichnet, dass** die Bildzellen (30) in einer Vielzahl von Zeilen (58) angeordnet sind und dass jeder Zeile (58) ein Identifikationscode (62) zugeordnet ist.

6. Vorrichtung nach einem der Ansprüche 1 bis 5, **dadurch gekennzeichnet, dass** die Bildzellen (30) in einer Vielzahl von Zeilen (58) angeordnet sind und dass jede Zeile (58) eine Vielzahl von Speicherzellen (60) beinhaltet.

7. Vorrichtung nach einem der Ansprüche 1 bis 6, **dadurch gekennzeichnet, dass** die Bildzellen (30) auf dem Bildsensor (50) einen zusammenhängenden Bildzellenbereich (52) bilden und dass die Speicherzellen (60) einen zusammenhängenden Speicherzellenbereich (54) bilden, der vorzugsweise an zumindest einer Seite des Bildzellenbereichs (52) angrenzt.

8. Vorrichtung nach einem der Ansprüche 1 bis 7, **dadurch gekennzeichnet, dass** die Bildzellen (30) in einer Vielzahl von Spalten angeordnet sind und dass jeder Spalte ein Identifikationscode zugeordnet ist.

9. Vorrichtung nach einem der Ansprüche 1 bis 8, **gekennzeichnet durch** eine mit den Speicherzellen (38; 60) verbundenen Steuerlogik (34), die dazu ausgebildet ist, in den Speicherzellen (38; 60) abgespeicherte Identifikationscodes (62) zyklisch oder azyklisch zu ändern, insbesondere zu negieren.

10. Vorrichtung nach einem der Ansprüche 1 bis 9, **dadurch gekennzeichnet, dass** die Identifikationscodes (62) als fehlererkennende Codes in den Speicherzellen (38; 60) abgespeichert sind.

11. Bildsensor zum Aufnehmen eines Bildes, mit einer Vielzahl von lichtempfindlichen Bildzellen (30), die zum Auslesen ihrer Bildsignalwerte wahlweise adressierbar sind, **gekennzeichnet durch** eine Vielzahl von Speicherzellen (60), die zum Abspeichern von Identifikationscodes (62) ausgebildet sind, wobei jeder Bildzelle (30) ein Identifikationscode (62) zugeordnet ist, und wobei die Bildzellen (30) und die Speicherzellen (60) so miteinander gekoppelt sind, dass beim Auslesen eines Bildsignalwertes aus einer Bildzelle (30) der zugeordnete Identifikationscode (62) mitauslesbar ist.

12. Verfahren zum Aufnehmen eines Bildes mit einem Bildsensor, der eine Vielzahl von lichtempfindlichen Bildzellen (30) aufweist, wobei die Bildzellen (30) zum Auslesen ihrer Bildsignalwerte wahlweise adressierbar sind, **gekennzeichnet durch** die Schritte:
a) Bereitstellen von Identifikationscodes (62) in Speicherzellen (38; 60), die mit den Bildzellen (30) gekoppelt sind, wobei jeder Bildzelle (30) ein Identifikationscode (62) zugeordnet ist,
b) Auslesen von Bildsignalwerten aus zumindest einer Bildzelle (30),
c) Auslesen des der zumindest einen Bildzelle (30) zugeordneten Identifikationscodes (62),
d) Überprüfen, ob der ausgelesene Identifikationscode (62) der zumindest einen ausgelesenen Bildzelle (30) zugeordnet ist, und
e) Verwerten der ausgelesenen Bildsignalwerte abhängig von dem Ergebnis in Schritt d).

13. Verwendung einer Vorrichtung nach einem der Ansprüche 1 bis 10 in einer Bildaufnahmeeinheit (16) zum Absichern eines Gefahrenbereichs (12), insbesondere des Gefahrenbereichs einer automatisiert arbeitenden Anlage (14).

## Claims

1. A device for recording an image, comprising an image sensor (28; 50) having a plurality of light-sensitive image cells (30) adapted to be selectively addressed in order to read their image signal values, **characterized by** a plurality of memory cells (38; 60) for storing identification codes (62), with each image cell (30) having assigned an identification code (62), and with the image cells (30) and the memory cells (38; 60) being coupled to one another such that, when an image signal value is read from an image cell (30), the assigned identification code (62) can also be read.

2. The device of claim 1, **characterized by** an addressing unit (36) configured to jointly address the memory cells (38; 60) and image cells (30) assigned to one another when reading.

3. The device of claim 1 or 2, **characterized in that** the memory cells (60) are integrated in the image sensor (50).

4. The device of one of claims 1 to 3, **characterized in that** the memory cells (60) are substantially in the form of image cells (30) of the image sensor (50) which are occupied by a light-independent signal value.

5. The device of one of claims 1 to 4, **characterized in that** the image cells (30) are arranged in a plurality of rows (58), with each row (58) having assigned an identification code (62).

6. The device of one of claims 1 to 5, **characterized in that** the image cells (30) are arranged in a plurality of rows (58), with each row (58) comprising a plurality of memory cells (60).

7. The device of one of claims 1 to 6, **characterized in that** the image cells (30) on the image sensor (50) form a common image cell area (52), and the memory cells (60) form a common memory cell area (54), which preferably adjoins at least one side of the image cell area (52).

8. The device of one of claims 1 to 7, **characterized in that** the image cells (30) are arranged in a plurality of columns, with each column having assigned an identification code.

9. The device of one of claims 1 to 8, **characterized by** a control unit (34) which is connected to the memory cells (38; 60) and which is designed to change, in particular to negate, identification codes (62) stored in the memory cells (38; 60) in a cyclical or non-cyclical manner.

10. The device of one of claims 1 to 9, **characterized in that** the identification codes (62) are stored as error detecting codes in the memory cells (38; 60).

11. An image sensor for recording an image, comprising a plurality of light-sensitive image cells (30) adapted to be selectively addressed in order to read their image signal values, **characterized by** a plurality of memory cells (60) for storing identification codes (62), with each image cell (30) having assigned an identification code (62), and with the image cells (30) and the memory cells (60) being coupled to one another such that, when an image signal value is read from an image cell (30), the assigned identification code (62) can also be read.

12. A method for recording an image with an image sensor having a plurality of light-sensitive image cells (30), wherein the image cells (30) can be selectively addressed in order to read their image signal values, **characterized by** the steps of:
a) providing identification codes (62) in memory cells (38; 60) which are coupled to the image cells (30), with each image cell (30) having assigned an identification code (62),
b) reading image signal values from at least one image cell (30),
c) reading the identification code (62) assigned to the at least one image cell (30),
d) checking whether the identification code (62) read matches the identification code assigned to the at least one image cell (30) that has been read, and
e) using the image signal values read depending on the result of step d).

13. The use of a device of one of claims 1 to 10 in an image recording unit (16) for safeguarding an hazardous area (12), in particular the hazardous area of an automatically operated installation (14).

## Revendications

1. Dispositif d'enregistrement d'une image, comportant un capteur d'image (28 ; 50) avec une pluralité de cellules vidéo (30) sensibles à la lumière, qui peuvent être adressées au choix pour extraire une valeur de signal vidéo, **caractérisé par** une pluralité de cellules de mémoire (38 ; 60) pour mémoriser des codes d'identification (62), un code d'identification (62) étant associé à chaque cellule vidéo (30), et les cellules vidéo (30) et les cellules de mémoire (38 ; 60) étant couplées entre elles de telle sorte que lors de l'extraction d'une valeur de signal vidéo hors d'une cellule vidéo (30), le code d'identification (62) associé est également extrait.

2. Dispositif selon la revendication 1, **caractérisé par** une unité d'adressage (36), qui est réalisée de telle sorte que, lors de l'extraction, elle adresse conjointement les cellules de mémoire (38 ; 60) et les cellules vidéo (30) associées les unes aux autres.

3. Dispositif selon la revendication 1 ou 2, **caractérisé en ce que** les cellules de mémoire (60) sont intégrées dans le capteur d'image (50).

4. Dispositif selon l'une quelconque des revendications 1 à 3, **caractérisé en ce que** les cellules de mémoire (60) sont réalisées sensiblement comme des cellules vidéo (30) du capteur d'image (50), lesquelles sont occupées par une valeur de signal indépendante de la lumière.

5. Dispositif selon l'une quelconque des revendications 1 à 4, **caractérisé en ce que** les cellules vidéo (30) sont agencées dans une pluralité de lignes (58) et **en ce qu'**un code d'identification (62) est associé à chaque ligne (58).

6. Dispositif selon l'une quelconque des revendications 1 à 5, **caractérisé en ce que** les cellules vidéo (30) sont agencées dans une pluralité de lignes (58) et **en ce que** chaque ligne (58) contient une pluralité de cellules de mémoire (60).

7. Dispositif selon l'une quelconque des revendications 1 à 6, **caractérisé en ce que** les cellules vidéo (30) forment sur le capteur d'image (50) une zone (52) de cellules vidéo contiguës, et **en ce que** les cellules de mémoire (60) forment une zone (54) de cellules de mémoire contiguës, laquelle est de préférence adjacente à au moins un côté de la zone (52) de cellules vidéo.

8. Dispositif selon l'une quelconque des revendications 1 à 7, **caractérisé en ce que** les cellules vidéo (30) sont agencées en une pluralité de colonnes et **en ce qu'**un code d'identification est associé à chaque colonne.

9. Dispositif selon l'une quelconque des revendications 1 à 8, **caractérisé par** une logique de commande (34), qui est reliée aux cellules de mémoire (38 ; 60) et qui est réalisée pour modifier, en particulier inverser logiquement, de manière cyclique ou acyclique des codes d'identification (62) mémorisés dans les cellules de mémoire (38 ; 60).

10. Dispositif selon l'une quelconque des revendications 1 à 9, **caractérisé en ce que** les codes d'identification (62) sont mémorisés dans les cellules de mémoire (38 ; 60) sous forme de codes détectant des erreurs.

11. Capteur d'image destiné à enregistrer une image, comportant une pluralité de cellules vidéo (30) sensibles à la lumière, qui peuvent être adressées au choix pour extraire leur valeur de signal vidéo, **caractérisé par** une pluralité de cellules de mémoire (60) pour mémoriser des codes d'identification (62), un code d'identification (62) étant associé à chaque cellule vidéo (30), et les cellules vidéo (30) et les cellules de mémoire (60) étant couplées entre elles de telle sorte que lors de l'extraction d'une valeur de signal vidéo hors d'une cellule vidéo (30), le code d'identification (62) associé est également extrait.

12. Procédé destiné à enregistrer une image avec un capteur d'image, qui comporte une pluralité de cellules vidéo (30) sensibles à la lumière, les cellules vidéo (30) pouvant être adressées au choix pour extraire leur valeur de signal vidéo, **caractérisé par** les étapes :
a) mise à disposition de codes d'identification (62) dans des cellules de mémoire (38 ; 60), qui sont couplées avec les cellules vidéo (30), un code d'identification (62) étant associé à chaque cellule vidéo (30),
b) extraction de valeurs de signaux vidéo hors d'au moins une cellule vidéo (30),
c) extraction du code d'identification (62) associé à ladite au moins une cellule vidéo (30),
d) vérification si le code d'identification (62) extrait est associé à ladite au moins une cellule vidéo (30) extraite, et
e) exploitation des valeurs de signaux vidéo extraites, en fonction du résultat dans l'étape d).

13. Utilisation d'un dispositif selon l'une quelconque des revendications 1 à 10 dans une unité d'enregistrement d'image (16) pour protéger une zone de danger (12), en particulier la zone de danger d'une installation (14) à fonctionnement automatisé.
